# EUROPEAN PATENT SPECIFICATION

(11) **EP 2 653 379 B1**
(45) Date of publication and mention of the grant of the patent: **10.01.2018**
(21) Application number: 13164002.1
(22) Date of filing: 16.04.2013
(51) Int. Cl.: B64C 11/20, B64C 11/24, B64C 11/26, B64C 27/473

(54) **Propeller blade with metallic foam spar core**
Propellerblatt mit Holmkern aus Metallschaum
Pale d'hélice à âme de longeron en mousse métallique

(30) Priority: 18.04.2012 US 201213449460
(43) Date of publication of application: 23.10.2013
(73) Proprietor: Hamilton Sundstrand Corporation, Windsor Locks, CT 06096-1010 (US)
(72) Inventor: Smith, Blair A., South Windsor, CT Connecticut CT 06074 (US); Folsom, Michael E., Ellington, CT Connecticut 06029 (US); Nagle, David P., Westfield, CT Connecticut 01085 (US)
(74) Representative: Leckey, David Herbert

(56) References cited:
- US-A- 4 648 921
- US-A1- 2009 220 347
- US-A1- 2010 209 254
- US-A1- 2012 020 801

## Description

### BACKGROUND OF THE INVENTION

The present invention relates to propellers and, in particular, to propeller blades formed having a metallic foam spar core.

Modem propeller blades typically include root portions which extend into the hub arm of the hub of the propeller system and which are secured to and rotatable relative to the hub arm via a retention assembly. Typically the retention assembly includes one or a plurality of ball bearing assemblies which permit the rotation of the blade in the hub arm for accomplishing pitch change of the blade for altering the speed of the propeller and accordingly, the aircraft.

The blades are typically formed by surrounding a foam spar core with a resin impregnated fabric that is braided on to the form spar core. Leading and trailing edges of the blade are then formed over the fabric and surrounded by, for example, a Kevlar® sock. Such blades are light and effective for their intended purposes.

A propeller blade having the features of the preamble of claim 1 is disclosed in US 2010/209254 A1.

### BRIEF DESCRIPTION OF THE INVENTION

According to the invention, there is provided a propeller blade as set forth in claim 1.

According to the invention, there is also provided a method of forming a propeller blade, as set forth in claim 10.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a plan-view of a prior art propeller blade;
FIG. 2 is a cross-section of the propeller blade shown in FIG. 1;
FIG. 3 illustrates a cut-away side view of a propeller blade having a spar core formed of a metallic foam; and
FIG. 4 is a plan view of a spar having a metallic foam core portion.

### DETAILED DESCRIPTION OF THE INVENTION

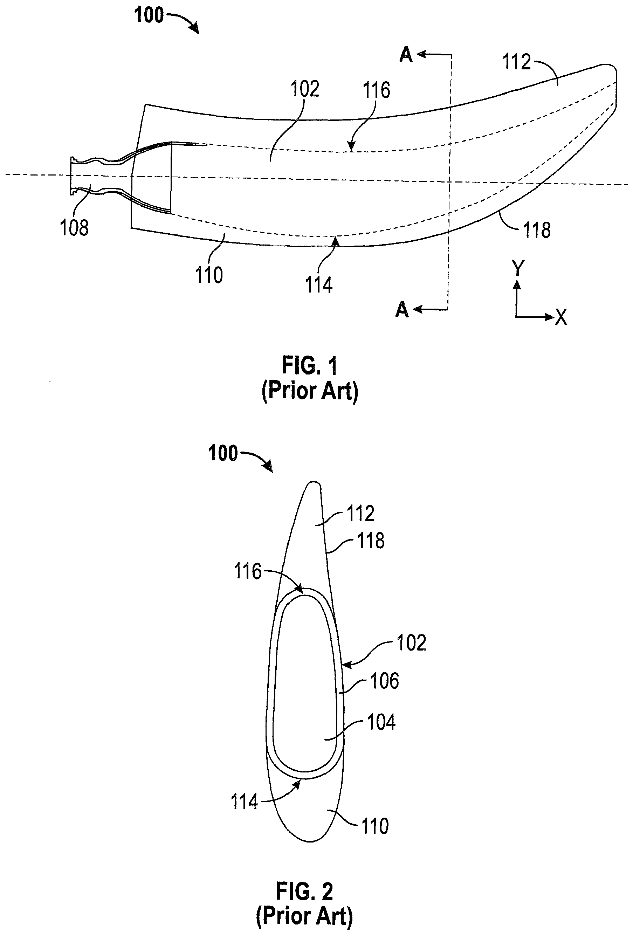

Referring now to FIG. 1, a plan view of a conventional propeller blade 100 is illustrated and will be used to define certain terms, explain how a propeller blade is generally made, and to illustrate the differences between embodiments of the present invention and the prior art. Reference will also be made to FIG. 2, which is a cross-section of the propeller blade 100 of FIG. 1 taken along line A-A, for these purposes. For convention, and as shown in the legend in FIG. 1, direction X shall be referred to as the span wise direction and direction Y shall be referred to as the chordwise direction.

The blade 100 is formed by first forming a spar 102. The spar 102 includes a spar foam core 104 surrounded by a structural layer 106. The core 104 is typically formed of a foam material that is injected into a mold. The mold can include a layer of fiberglass on the walls thereof that to which the foam of the core 104 adheres. As such, the core 104 can be surrounded by a layer of fiberglass (not shown). The foam that forms the core 104 is typically selected from one of: polyurethane (PU), polyisocyanurate, or polymethacrylimide (PMI).

The structural layer 106 is typically formed of a dry braided carbon fiber which is subsequently resin injected or a resin-impregnated fabric material (e.g. resin impregnated carbon fiber fabric) and disposed such that it surrounds the core 104 (and the fiberglass layer if it is included). The structural layer 106 is typically braided onto the core 104. In some cases, the spar 102 is heated to set the resin in the structural layer 106. Considerable thermal stresses can occur in the core 104 as the spar 102 is cooled due to the differences in the coefficients of thermal expansion (CTE) of the core 104 and the structural layer 106.

In some instances, the spar 102 is formed such that a portion of it is surrounded by a root portion 108 that allows the blade 100 to be connected to a hub (not shown). Rotation of the hub causes the blade 100 to rotate and, consequently, causes the generation of thrust to propel an aircraft. In the following discussion, it shall be assumed that the blade 100 rotates in the clockwise direction. The root portion 108 is sometimes referred to as a "tulip" in the industry and is typically formed of a metal.

After the spar 102 is formed, leading edge foam 110 and trailing edge foam 112 are formed on the leading and trailing edges 114, 116, respectively of the spar 102. The leading edge foam 110, trailing edge foam 112 and the spar 102 can then be encased in an outer layer 118. The outer layer 118 can be formed of Kevlar® and be in the form of a sock that is pulled over the assembly that includes the leading edge foam 110, trailing edge foam 112 and the spar 102. Of course, the outer layer 118 could be formed in other manners as well.

As described above, considerable thermal stresses can occur in the core 104 as the spar 102 is cooled due to the differences in the coefficients of thermal expansion (CTE) of the core 104 and the structural layer 106. In addition, thermal stresses can be created between the core 104 and the structural layer 106 due to the wide range of temperatures experienced by the propeller blade 100 in normal operation.

According to one embodiment, rather than utilizing the foam core 104 described above, at least a portion of the foam core is replaced with metallic foam. In one embodiment, the entire foam core 104 is replaced with metallic foam. In another embodiment, only a portion of the foam core is replace with metallic foam. The metallic foam is coupled to the remaining portions of the conventional foam.

Provision of a metallic spar foam may provide for a better bond between the core and the structural layer 106. This may be due do the fact that a metal foam has a higher strength and greater bonding surface area due to the potential for an open cell structure than the polyurethane foam typically used which has a resin skin on the surface that closes off the cell structure. In one embodiment, the metallic foam may be coated with either a film or paste adhesive to optimize bond strength to the surrounding structural layer. The metallic foam core may extend along the full length of the blade, or its length may be optimized to reduce weight. The metallic foam would also be appropriately surface prepared (e.g., in the case of aluminum foam, by conversion coating or anodizing) to enhance the bonding process beyond mechanical interlock of the adhesive to the metal foam. Proper surface preparation will promote adhesion to the metallic foam and enhance the durability of the bond joint.

As used herein, a metallic foam shall refer to a cellular structure consisting of a solid metal, containing a large volume fraction of gas-filled pores. The metallic foam used herein can have pores that are sealed (closed-cell foam), or they can form an interconnected network (open-cell foam).

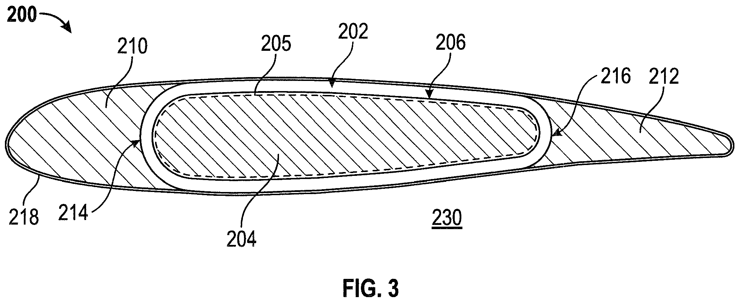

FIG. 3 illustrates a cut-away side view of a propeller blade 200 according to one embodiment of the present invention. The blade 200 is formed by first forming a spar 202. The spar 202 includes a metallic spar foam core 204. The metallic spar foam core 204 can be formed in a mold or can be machined. According to one embodiment, an adhesive layer 205 is formed on the outside of the core 204. The adhesive layer 205 is formed of an elastomeric or other high strain rate adhesive material. Examples of suitable adhesives include polyurethane adhesive and polysulfide adhesive.

A structural layer 206 can then be formed around the adhesive layer 205. In one embodiment, the structural layer 206 is formed of dry braided carbon fiber which is subsequently resin injected or a resin-impregnated fabric material (e.g. resin impregnated carbon fiber fabric) and disposed such that it surrounds the core 204 (and the fiberglass layer if it is included). In some cases, the spar 202 is heated to set the resin in the structural layer 206.

After the spar 202 is formed, leading edge foam 210 and trailing edge foam 212 are formed on the leading and trailing edges 214, 216, respectively of the spar 202. In embodiments of the invention, the leading and trailing edge foams 210, 212 are formed of metallic foam. The leading edge foam 210, trailing edge foam 212, and the spar 202 can then be encased in an outer layer 218. The outer layer 218 can be formed of Kevlar® and in the form of a sock that is pulled over the assembly that includes the leading edge foam 210, trailing edge foam 212, and the spar 202. Of course, the outer layer 218 could be formed in other manners as well.

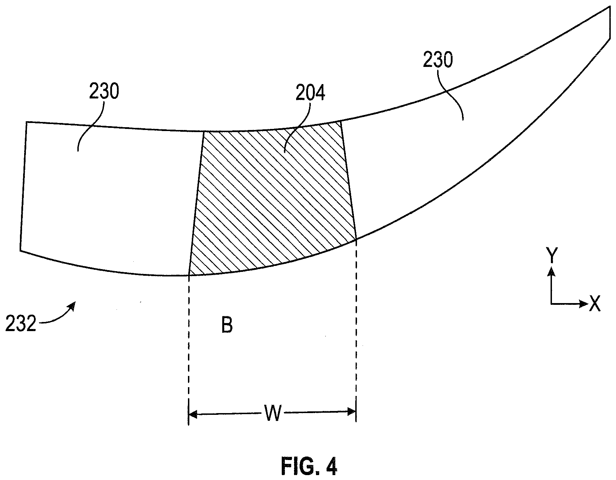

FIG. 4 shows a plan view of a spar core 232 according to one embodiment. In this embodiment, the spar core 232 includes a metallic foam spar 202, a metallic foam core 204, and conventional foam core portions 230. Such a spar 232 could be formed, for example, by forming a conventional foam spar core as described above and cutting a portion sized to receive the metallic foam core 204. The conventional 230 and metallic 204 foam cores can then be bonded together, for example, with an adhesive material. The metallic foam 204 could be formed in another mold or in the same mold as that used to form the conventional foam core and then machined to the desired span wise length (w). A structural layer 106 can then be formed about the conventional 230 and metallic 204 foam cores. Incorporation of metallic foam may reduce or prevent possible cracking which may occur due to thermal stresses between the structural layer 106 and spar core 232. This is achieved because the metallic foam has a higher strength and a lower coefficient of thermal expansion (CTE) than the polyurethane foam. The lower CTE of the metallic foam is particularly beneficial, as it provides a closer match to the CTE of the carbon fiber spar laminate and Kevlar® shell laminate.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A propeller blade (200) comprising:
a metallic foam core (204); and
a structural layer (206) that surrounds at least a portion of the metallic foam core (204); **characterised by** further comprising:
at least one of a leading and a trailing edge (214, 216) formed of metallic foam (210, 212).

2. The propeller blade of claim 1, further comprising:
a layer of fiberglass at least partially disposed between the metallic foam core (204) and the structural layer (206).

3. The propeller blade of claim 1 or 2, further comprising:
a layer (205) of an adhesive material at least partially disposed between the metallic foam core (204) and the structural layer (206).

4. The propeller blade of any preceding claim, further comprising:
a root (108) disposed within the structural layer (206) at an end of the propeller blade (200).

5. The propeller blade of any preceding claim, further comprising:
a foam core (230) formed of a non-metallic foam in operable contact with the metallic foam core (204) and surrounded by the structural layer (206).

6. The propeller blade of claim 5, wherein the foam core (230) is formed of polyurethane foam, polyisocyanurate foam, or polymethacrylimide foam.

7. The propeller blade of any preceding claim, wherein the metallic foam of the metallic foam core (204) is one of: an aluminum metallic foam and a titanium metallic foam.

8. The propeller blade of any preceding claim, wherein the metallic foam of the metallic foam core (204) is an open celled metallic foam.

9. The propeller blade of any of claims 1 to 7, wherein the metallic foam of the metallic foam core (204) is a closed celled metallic foam.

10. A method of forming a propeller blade (200) comprising:
forming a metallic foam core (204); and
disposing a structural layer (206) over at least a portion of the metallic foam core; **characterised by**:
forming at least one of a leading and trailing edge (214, 216) of the propeller blade (200) of metallic foam (210, 212).

11. The method of claim 10, further comprising:
applying an adhesive material (205) to the metallic foam core (204) before disposing the structural layer (206).

12. The method of claim 10, further comprising:
forming a non-metallic core (230); and
joining a portion of the non-metallic foam core (230) to the metallic foam core (204);
wherein disposing the structural layer (206) over at least a portion of the metallic foam core (204) includes also disposing the structural layer over at least a portion of the non-metallic foam core (230).

13. The method of claim 12, wherein the non-metallic core (230) is formed of polyurethane foam, polyisocyanurate foam, or polymethacrylimide foam.

14. The method of any of claims 10 to 13, wherein the metallic foam of the metallic foam core (204) is one of: an aluminum metallic foam and a titanium metallic foam.

15. The method of any of claims 10 to 14, wherein the metallic foam of the metallic foam core (204) is an open celled metallic foam or a closed celled metallic foam.

## Patentansprüche

1. Propellerblatt (200), umfassend:
einen Metallschaumkern (204); und
eine Strukturschicht (206), die wenigstens einen Abschnitt des Metallschaumkerns (204) umgibt; **dadurch gekennzeichnet, dass** es ferner Folgendes umfasst:
wenigstens eine von einer Vorder- und einer Hinterkante (214, 216), die aus Metallschaum (210, 212) gebildet ist.

2. Propellerblatt nach Anspruch 1, ferner umfassend:
eine Schicht aus Glasfasern, die wenigstens teilweise zwischen dem Metallschaumkern (204) und der Strukturschicht (206) angeordnet ist.

3. Propellerblatt nach Anspruch 1 oder 2, ferner umfassend:
eine Schicht (205) aus einem klebenden Material, die wenigstens teilweise zwischen dem Metallschaumkern (204) und der Strukturschicht (206) angeordnet ist.

4. Propellerblatt nach einem der vorangehenden Ansprüche, ferner umfassend:
einen Fuß (108), der in der Strukturschicht (206) an einem Ende des Propellerblatts (200) angeordnet ist.

5. Propellerblatt nach einem der vorangehenden Ansprüche, ferner umfassend:
einen Schaumkern (230), der aus einem Nichtmetallschaum gebildet ist, in Wirkkontakt mit dem Metallschaumkern (204) und umgeben von der Strukturschicht (206).

6. Propellerblatt nach Anspruch 5, wobei der Schaumkern (230) aus Polyurethanschaum, Polyisocyanuratschaum oder Polymethacrylimidschaum gebildet ist.

7. Propellerblatt nach einem der vorangehenden Ansprüche, wobei der Metallschaum des Metallschaumkerns (204) einer der folgenden ist: ein Aluminiummetallschaum und ein Titanmetallschaum.

8. Propellerblatt nach einem der vorangehenden Ansprüche, wobei der Metallschaum des Metallschaumkerns (204) ein offenzelliger Metallschaum ist.

9. Propellerblatt nach einem der Ansprüche 1 bis 7, wobei der Metallschaum des Metallschaumkerns (204) ein geschlossenzelliger Metallschaum ist.

10. Verfahren zum Bilden eines Propellerblatts (200), umfassend:
Bilden eines Metallschaumkerns (204); und
Anordnen einer Strukturschicht (206) über wenigstens einem Abschnitt des Metallschaumkerns; **gekennzeichnet durch**:
Bilden von wenigstens einer von einer Vorder- und einer Hinterkante (214, 216) des Propellerblatts (200) aus Metallschaum (210, 212).

11. Verfahren nach Anspruch 10, ferner umfassend:
Auftragen eines klebenden Materials (205) auf den Metallschaumkern (204) vor dem Anordnen der Strukturschicht (206).

12. Verfahren nach Anspruch 10, ferner umfassend:
Bilden eines Nichtmetallkerns (230); und
Verbinden eines Abschnitts des Nichtmetallkerns (230) mit dem Metallschaumkern (204);
wobei das Anordnen der Strukturschicht (206) über wenigstens einem Abschnitt des Metallschaumkerns (204) auch das Anordnen der Strukturschicht über wenigstens einem Abschnitt des Nichtmetallschaumkerns (230) beinhaltet.

13. Verfahren nach Anspruch 12, wobei der Nichtmetallkern (230) aus Polyurethanschaum, Polyisocyanuratschaum oder Polymethacrylimidschaum gebildet wird.

14. Verfahren nach einem der Ansprüche 10 bis 13, wobei der Metallschaum des Metallschaumkerns (204) einer der folgenden ist: ein Aluminiummetallschaum und ein Titanmetallschaum.

15. Verfahren nach einem der Ansprüche 10 bis 14, wobei der Metallschaum des Metallschaumkerns (204) ist ein offenzelliger Metallschaum oder ein geschlossenzelliger Metallschaum ist.

## Revendications

1. Pale d'hélice (200) comprenant :
un noyau en mousse métallique (204) ; et
une couche structurelle (206) qui entoure au moins une partie du noyau en mousse métallique (204) ; **caractérisé en ce qu'**elle comprend en outre :
au moins l' un d' un bord d'attaque et d'un bord de fuite (214, 216) formé d'une mousse métallique (210, 212).

2. Pale d'hélice selon la revendication 1, comprenant en outre :
une couche de fibre de verre disposée au moins partiellement entre le noyau en mousse métallique (204) et la couche structurelle (206).

3. Pale d'hélice selon la revendication 1 ou 2, comprenant en outre :
une couche (205) d'un matériau adhésif disposé au moins partiellement entre le noyau en mousse métallique (204) et la couche structurelle (206).

4. Pale d'hélice selon l'une quelconque revendication précédente, comprenant en outre :
un pied (108) disposé à l'intérieur de la couche structurelle (206) au niveau d'une extrémité de la pale d'hélice (200).

5. Pale d'hélice selon l'une quelconque revendication précédente, comprenant en outre :
un noyau en mousse (230) formé d'une mousse non métallique en contact fonctionnel avec le noyau en mousse métallique (204) et entouré par la couche structurelle (206).

6. Pale d'hélice selon la revendication 5, dans laquelle le noyau en mousse (230) est formé de mousse de polyuréthane, de mousse de polyisocyanurate ou de mousse de polyméthacrylimide.

7. Pale d'hélice selon l'une quelconque revendication précédente, dans laquelle la mousse métallique du noyau en mousse métallique (204) est l'une parmi: une mousse métallique en aluminium et une mousse métallique de titane.

8. Pale d'hélice selon l'une quelconque revendication précédente, dans laquelle la mousse métallique du noyau en mousse métallique (204) est une mousse métallique à alvéoles ouvertes.

9. Pale d'hélice selon l'une quelconque des revendications 1 à 7, dans laquelle la mousse métallique du noyau en mousse métallique (204) est une mousse métallique à alvéoles fermées.

10. Procédé de formation d'une pale d'hélice (200) comprenant : la formation d'un noyau en mousse métallique (204) ; et la disposition d'une couche structurelle (206) sur au moins une partie du noyau en mousse métallique ; **caractérisé par** : la formation d'au moins un parmi un bord d'attaque et un bord de fuite (214, 216) de la pale d'hélice (200) en mousse métallique (210, 212).

11. Procédé selon la revendication 10, comprenant en outre : l'application d'un matériau adhésif (205) au noyau en mousse métallique (204) avant de mettre en place la couche structurelle (206).

12. Procédé selon la revendication 10, comprenant en outre : la formation d'un noyau en mousse non métallique (230) ; et la jonction d'une partie du noyau en mousse non métallique (230) au noyau en mousse métallique (204) ;
dans lequel la disposition de la couche structurelle (206) sur au moins une partie du noyau en mousse métallique (204) comprend également la disposition de la couche structurelle sur au moins une partie du noyau en mousse non métallique (230).

13. Procédé selon la revendication 12, dans lequel le noyau non métallique (230) est formé de mousse de polyuréthane, de mousse de polyisocyanurate ou de mousse de polyméthacrylimide.

14. Procédé selon l'une quelconque des revendications 10 à 13, dans lequel la mousse métallique du noyau en mousse métallique (204) est l'une parmi : une mousse métallique en aluminium et une mousse métallique en titane.

15. Procédé selon l'une quelconque des revendications 10 à 14, dans lequel la mousse métallique du noyau en mousse métallique (204) est une mousse métallique à alvéoles ouvertes ou une mousse métallique à alvéoles fermées.
